# EUROPÄISCHE PATENTANMELDUNG

(11) **EP 1 117 051 A1**
(43) Veröffentlichungstag der Anmeldung: **18.07.2001**
(21) Anmeldenummer: 00100851.5
(22) Anmeldetag: 17.01.2000
(51) Int. Cl.: G06F 17/30, G06F 17/60

(54) **Verfahren zur Verwaltung von Datensätzen**

(71) Anmelder: Tiscon Aktiengesellschaft, 80981 Ulm (DE)
(72) Erfinder: Holstein, Reinhold, 89518 Heidenheim (DE)
(74) Vertreter: Charrier, Rolf, Dipl.-Ing.

(57) **Zusammenfassung**

Die Erfindung betrifft ein Verfahren zur Verwaltung einer Vielzahl von in einer Datenbank gespeicherten Datensätzen von Produkten, wobei jedem Produkt eine Liste von Eigenschaften zugeordnet ist.

Die Aufgabe, ein Verfahren zur Verwaltung von Datensätzen so auszubilden, daß es sich ohne Eingriff in die Feldstruktur der Datenbank den sich ändernden Marktverhältnissen und den sich ändernden Produkten und Produkteigenschaften anpaßt, wird dadurch gelöst, daß eine Vielzahl von Benutzerzugängen zu der Datenbank bereitgestellt wird und folgende, sich ständig wiederholenden Verfahrensschritte durchgeführt werden:
a) Eingabe von Eigenschaften durch einen Benutzer unabhängig von bereits in den Datensätzen vorhandenen Eigenschaften,
b) Durchsuchen der Datenbank und Ausgabe einer Liste von Produkten, deren Eigenschaften mit den eingegebenen Eigenschaften übereinstimmen,
c) Erstellen eines neuen Datensatzes mit den eingegebenen Eigenschaften und Abspeichern dieses Datensatzes in der Datenbank.

## Beschreibung

Die Erfindung betrifft ein Verfahren zur Verwaltung einer Vielzahl von in einer Datenbank gespeicherten Datensätzen von Produkten nach dem Oberbegriff des Anspruches 1.

Unter Produkten im Sinne dieser Beschreibung und der Ansprüche sind dabei gleichermaßen Waren und Dienstleistungen zu verstehen.

Derartige, gattungsbildende Verfahren können auf einer Vielzahl der am Markt erhältlichen und handelsüblichen Datenbanken ausgeführt werden. Bei diesen bekannten Datenbanken ist beispielsweise jedem Produkt ein Datensatz mit einer Vielzahl von Feldern zugeordnet. Jedes Feld eines Datensatzes enthält eine bestimmte Eigenschaft des Produktes dieses Datensatzes. Hierbei kann es sich sowohl um produktspezifische Eigenschaften als auch um herstellerspezifische Eigenschaften handeln oder auch um andere Eigenschaften, beispielsweise solche, die den Vertriebsweg des Produktes betreffen.

Handelt es sich bei dem Produkt beispielsweise um einen Elektromagneten, so weist der Datensatz ein Feld auf, in dem die Produktbezeichnung "Elektromagnet" steht sowie weitere, fest vorgegebene Felder für die Hubkraft des Elektromagneten (gemessen in Newton), dem Verschiebungsweg (gemessen in cm), die elektrische Schutzart (als IP-Norm), die Betriebsspannung (gemessen in Volt) etc.

Diese Datenbanken sind üblicherweise auf einen Datenträger, beispielsweise auf einer CD-ROM gespeichert und über einen Personalcomputer abfragbar. Wünscht der Benutzer eine Liste der in der Datenbank gespeicherten Elektromagnete, die seinen Anforderungen entsprechen sollten, gibt er als Produktnamen in das entsprechende Feld "Elektromagnet" ein und hat darüber hinaus die Möglichkeit, bestimmte Eigenschaften, beispielsweise einen Wert für die Hubkraft, die Betriebsspannung etc. weiter zu spezifizieren. Die Datenbank sucht daraufhin nach Produkten mit dem Namen "Elektromagnet", die diese Eigenschaften aufweisen und gibt eine entsprechende Liste aus.

Nachteilig bei diesem Abrufverfahren ist, daß sich der Benutzer mit seinen Abfragewünschen an die in der Datenbank als Felder vorgegebenen Eigenschaften der Produkte zu halten hat. Sucht der Benutzer beispielsweise einen Elektromagneten mit einer bestimmten maximalen Leistungsaufnahme, einem bestimmten Gewicht oder einem maximalen Preis, so kann er diese Anforderungen in die oben beschriebene Datenbank nicht eingeben, weil keine entsprechenden Felder vorgesehen sind. Selbst wenn der Benutzer jedoch eine Datenbank mit dynamischen Feldern benutzt, wird er bei der Eingabe neuer Parameter keine Resultate erhalten, da die neuen, abgefragten Eigenschaften auf kein entsprechendes Angebot zurückgreifen können.

Derartige Verfahren mit fest vorgegebenem Aufbau der Datensätze sind daher zur Abfrage von Produktlisten dann nicht geeignet, wenn sich die Märkte und die Benutzeranforderungen schnell verändern, da die Eigenschaften, für welche Felder vorgesehen sind, häufig bereits veraltet oder für den Benutzer aus anderen Gründen nicht mehr von Interesse sind.

Es besteht daher die Aufgabe, ein Verfahren zur Verwaltung von Datensätzen so auszubilden, daß es sich ohne Eingriff in die Feldstruktur der Datenbank den sich ändernden Marktverhältnissen und den sich ändernden Produkten und Produkteigenschaften anpaßt.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel der Erfindung, welches auch deren Vorteile gegenüber dem Stand der Technik zeigt, wird im folgenden näher beschrieben.

Das erfindungsgemäße Verfahren wird unter Benutzung einer im wesentlichen bekannten Datenbank ausgeführt, die auf bekannten Rechnersystemen laufen kann, beispielsweise auf Personalcomputern und Großrechnern. In der bevorzugten Ausführungsform wird die Datenbank auf einem an das Internet angeschlossenen Rechner verwaltet, wodurch weltweit eine Vielzahl von Benutzerzugängen über das Internet auf diese Datenbank in an sich bekannter Weise geschaffen wird.

Soweit im folgenden von Benutzung des Verfahrens gesprochen wird, handelt es sich sowohl um Anbieter als auch um Nachfrager von Produkten (Waren und Dienstleistungen).

Der Zugang der Benutzer zu der Datenbank kann in an sich bekannter Weise kontrolliert werden, beispielsweise durch Vergabe von Zugriffscodes und Passwörtern.

Die Datenbank selbst ist weitgehend in an sich bekannter Weise aufgebaut und in der Lage, eine Vielzahl von Datensätzen zu verwalten, wobei jeder Datensatz eine Vielzahl von Feldern aufweist. Diese Felder sind jedoch im Gegensatz zu den handelsüblichen Datenbanken nicht bereits bei der Einrichtung der Datenbank fest zu definieren, sondern variabel. Jeder Benutzer der Datenbank kann also bei dem von ihm eingegebenen Datensatz Felder für Eigenschaften hinzufügen, für die noch kein Feld vorhanden ist. Es handelt sich daher um variable und von jedem Benutzer zu verändernde Datensätze. Jeder Benutzer kann selbstverständlich nur bei den von ihm selbst neu eingegebenen Datensätzen neue Felder anlegen, nicht jedoch bereits eingegebene Datensätze Dritter durch Anfügen oder Weglassen von Feldern ändern.

Wünscht beispielsweise ein Benutzer als Nachfrager eine Aufstellung sämtlicher im Angebot (d. h. in der Datenbank) befindlicher Elektromagnete mit einem vorgegebenen Eigenschaftsprofil, so wird er sich zunächst darüber informieren, welche Datensätze über Elektromagneten bereits vorhanden sind und nach welchen Eigenschaften er daher suchen kann. Hierzu gibt er in ein den weiteren Feldern der Datenbank übergeordnetes Hauptfeld den Begriff "Elektromagnet" als sogenannte Entität ein. Daraufhin werden die Datensätze der Datenbank auf übereinstimmende Entitäten abgefragt und die zu dieser Entität vorhandenen Eigenschaften (nicht aber deren Werte in den einzelnen Datensätzen) angezeigt. Damit hat der Benutzer einen Überblick über alle Eigenschaften, die in beliebigen zu dieser Entität gehörenden Datensätzen vorhanden sind. Gleichzeitig wird zu jeder dieser Eigenschaften eine Häufigkeit angezeigt, also ein Zahlenwert, der angibt, wie oft diese Eigenschaft in den Datensätzen zu dieser Entität benannt ist. Der Benutzer kann daraufhin die Datensätze einsehen, die Eigenschaften weiter spezifizieren und beliebige andere, an sich bekannte datenbanktechnische und statistische Auswahlen treffen, bis er eine ihn zufriedenstellende Auswahl gefunden hat.

Stellt sich hierbei heraus, daß die den Benutzer (Nachfrager) eigentlich interessierenden Eigenschaften in dieser Aufstellung nicht enthalten sind, so wird der Benutzer in seinem Nachfrage-Datensatz ein oder mehrere neue Felder eröffnen und mit den ihn interessierenden Eigenschaften bezeichnen sowie diese Eigenschaften mit geeigneten Werten vorgeben. Hierzu ist jedes neue eingefügte Feld in zwei oder drei Bereiche unterteilt. Im ersten Bereich steht der Name der neuen Eigenschaft, im zweiten Bereich die Angabe dieser Eigenschaft. Beispielsweise kann der Name der Eigenschaft "Farbe" sein und die dazugehörende Angabe "blau", "rot" oder "grün". Alternativ hierzu kann der Bereich, der die Angabe enthält auch zweigeteilt sein, um bei zahlenmäßig festgesetzten Angaben die Eingabe eines Minimal- und eines Maximalwertes zu ermöglichen, beispielsweise also um nach Elektromagneten mit einer Betriebsspannung zwischen 6Volt (Minimalangabe) und 12Volt (Maximalangabe) suchen zu können.

Hat der nachfragende Benutzer einen derartigen Datensatz erstellt, wird die Datenbank nach den gewünschten Eigenschaften durchsucht und eine Liste von Produkten erstellt, deren Eigenschaften mit den angegebenen Eigenschaften übereinstimmen. Hierbei ist bei variablen Angaben (Minimal- und Maximalwerte) unter Übereinstimmung zu verstehen, daß der Wertebereich des angebotenen Produkts im nachgefragten Bereich liegt.

Hat der nachfragende Benutzer neue Eigenschaften eingegeben, wird die ausgegebene Liste keine Produkte enthalten, da keine Produkte mit den neuen Eigenschaften gespeichert sind.

Allerdings wird die neue Nachfrage des Benutzers mit den neu vom nachfragenden Benutzer definierten Eigenschaften als neuer Datensatz in der Datenbank abgespeichert und steht so für weitere Nachfrager und auch für anbietende Benutzer zur Verfügung. Weitere Nachfrager werden sich an den neu eingegebenen Eigenschaften orientieren, wenn diese Eigenschaften auch für sie von Interesse sind und entsprechende Anfragen absenden.

Vor allem können jedoch anbietende Benutzer feststellen, welche Eigenschaften auf dem Markt nachgefragt werden und ihr Angebot entsprechend erweitern oder auch nur ihre Datensätze entsprechend ergänzen, um bei entsprechenden Nachfragen berücksichtigt zu werden.

Ein Anbieter wird sich daher nach den neuesten Datensätzen von anfragenden Benutzern orientieren und diejenigen Daten herausstellen, an denen auf dem Markt ein besonders großes Interesse besteht. Der Anbieter hat auch die Möglichkeit, unmittelbar auf einen Datensatz eines nachfragenden Benutzers zu reagieren, also ein entsprechendes Angebot dem nachfragenden Benutzer unmittelbar zukommen zu lassen.

Häufig interessieren den nachfragenden Benutzer nicht nur produktspezifische Eigenschaften, sondern auch Eigenschaften des Lieferuntemehmens, beispielsweise dessen Umsatz, der eine Mindestsumme nicht unterschreiten sollte, das Herstellerland, die Tatsache, ob der Betrieb eine Qualitäts-Zertifizierung hat und das Datum des letzten Zertifizierungsgespräches. Auch diese Angaben kann der Benutzer in sein Abfrageprofil eingeben. Andererseits werden die anbietenden Unternehmen diese Angaben bereits in die Datensätze ihrer Produkte aufnehmen, um bei entsprechenden Nachfragen nachfragender Benutzer genannt zu werden.

In einer bevorzugten Ausgestaltung gibt die Datenbank nicht nur eine Liste von Produkten aus, deren Eigenschaften vollständig mit den eingegebenen Eigenschaften übereinstimmen, sondern auch Produkte, von denen nur ein Teil ihrer Eigenschaften mit den eingegebenen Eigenschaften übereinstimmen. Beispielsweise kann auch dann eine Ausgabe erfolgen, wenn von vier eingegebenen Eigenschaften nur drei erfüllt sind. Hierbei können die Eigenschaften auch gewichtet sein, so daß sichergestellt ist, daß auf wichtige Eigenschaften stärker geachtet wird als auf unwichtige Eigenschaften. Diese Gewichtung kann vom Betreiber der Datenbank oder von den Benutzern durch Anfügen entsprechender Angaben in den Datensätzen vorgenommen werden. Die Gewichtung kann beispielsweise über die Häufigkeit erfolgen, die - wie oben beschrieben - angibt, wie oft diese Eigenschaft in den Datensätzen zu einer Entität benannt ist.

In einer bevorzugten Ausgestaltung der Erfindung hat der Benutzer auch die Möglichkeit, für die von ihm definierten Eigenschaften Synonyme anzugeben, die die Datenbank dann mit berücksichtigt. Diese Synonyme können andere technische Bezeichnungen sein, jedoch auch Übersetzungen der Bezeichnungen in andere Sprachen, um einen Zugriff aus anderssprachigen Staaten in deren Landessprache zu ermöglichen.

Verglichen mit bekannten Datenbanksystemen hat das erfindungsgemäße Verfahren den Vorteil, daß es sehr schnell auf Veränderungen im Angebots- und Nachfrageprofil reagiert. Die freie Eingabe von beliebigen Eigenschaften durch den Benutzer sowie das Abspeichern dieser neuen Eigenschaftsprofile als neue Datensätze in der Datenbank ermöglichen eine sich selbständig weiter entwickelnde, selbst organisierende Datenbankstruktur.

In einer besonders bevorzugten Ausgestaltung wird das Verfahren, wie beschrieben, auf dem Internet eingesetzt. Es kann jedoch auch im firmeninternen Intranet oder anderer Rechnernetzen eingesetzt werden. Voraussetzung ist in jedem Fall, daß eine Vielzahl von Benutzerzugängen vorgesehen ist, wodurch die Selbstorganisation ermöglicht wird.

## Patentansprüche

1. Verfahren zur Verwaltung einer Vielzahl von in einer Datenbank gespeicherten Datensätzen von Produkten, wobei jedem Produkt eine Liste von Eigenschaften zugeordnet ist, **gekennzeichnet durch** die Bereitstellung einer Vielzahl von Benutzerzugängen zu der Datenbank und folgende, sich ständig wiederholenden Verfahrensschritte:
a) Eingabe von Eigenschaften durch einen Benutzer unabhängig von bereits in den Datensätzen vorhandenen Eigenschaften,
b) Durchsuchen der Datenbank und Ausgabe einer Liste von Produkten, deren Eigenschaften mit den eingegebenen Eigenschaften übereinstimmen,
c) Erstellen eines- neuen Datensatzes mit den eingegebenen Eigenschaften und Abspeichern dieses Datensatzes in der Datenbank.

2. Verfahren nach Anspruch 1, **dadurch gekennzeichnet**, daß die ausgegebene Liste auch Produkte enthält, von denen nur ein Teil ihrer Eigenschaften mit den eingegebenen Eigenschaften übereinstimmt.

3. Verfahren nach einem der voranstehenden Ansprüche, **dadurch gekennzeichnet**, daß die Vielzahl von Benutzerzugängen durch Zugriffsmöglichkeiten auf die Datenbank aus einem internationalen, nationalen, regionalen oder lokalen Computernetz, beispielsweise dem Internet oder einem Intranet, ermöglicht wird.

4. Verfahren nach einem der voranstehenden Ansprüche, **dadurch gekennzeichnet**, daß die Produkte Waren und/oder Dienstleistungen sind.

5. Verfahren nach einem der voranstehenden Ansprüche, **dadurch gekennzeichnet**, daß die Datenbank eine Vielzahl von Datensätzen umfaßt, wobei jeder Datensatz eine Anzahl von Feldern aufweist, welche mit Eigenschaften belegt sind.

6. Verfahren nach Anspruch 5, **dadurch gekennzeichnet**, daß jeder Datensatz ein Hauptfeld aufweist, welches den weiteren Feldern übergeordnet ist und das Hauptfeld mit einer Eigenschaft belegt ist, die eine Entität des Produkts bezeichnet.

7. Verfahren nach Anspruch 6, **dadurch gekennzeichnet**, daß bei Eingabe einer Entität eine Häufigkeitsverteilung zur Anzeige kommt, aus der hervorgeht, mit welchen jeweiligen Häufigkeiten diese Entität durch bestimmte Eigenschaften beschrieben wird.

8. Verfahren nach einem der voranstehenden Ansprüche, **dadurch gekennzeichnet**, daß die Eigenschaften zahlenmäßig erfaßbare Eigenschaften umfassen und bei der Eingabe von Eigenschaften ein Minimal- und ein Maximalwert in getrennte Felder eingegeben wird.

9. Verfahren nach einem der voranstehenden Ansprüche, **dadurch gekennzeichnet**, daß bei Eingabe der Eigenschaften durch einen nachfragenden Benutzer eine Liste von Produkten anbietender Benutzer erstellt wird.

10. Verfahren nach einem der Ansprüche 1 bis 8, **dadurch gekennzeichnet**, daß auf Eingabe von Eigenschaften durch einen anbietenden Benutzer eine Liste von Produkten nachfragender Benutzer erstellt wird.

11. Verfahren nach einem der voranstehenden Ansprüche, **dadurch gekennzeichnet**, daß die Eigenschaften produktspezifische und/oder herstellerspezifische Eigenschaften sind.

12. Verfahren nach einem der voranstehenden Ansprüche, **dadurch gekennzeichnet**, daß für jede Eigenschaft eine Synonymliste vorhanden ist, in die der Benutzer synonyme Bezeichnungen der Eigenschaft eingeben kann.

13. Computerprogrammprodukt, das direkt in den internen Speicher eines Computers geladen werden kann und Software-Code-Abschnitte umfaßt, mit denen die Schritte gemäß Anspruch 1 ausgeführt werden, wenn das Produkt auf einem Computer läuft.
